# EUROPEAN PATENT APPLICATION

(11) **EP 1 783 874 A1**
(43) Date of publication of application: **09.05.2007**
(21) Application number: 05768411.0
(22) Date of filing: 03.08.2005
(51) Int. Cl.: H02G 11/00, B60R 16/02

(54) **ELECTRIC SUPPLY DEVICE FOR LONG SLIDE**

(30) Priority: 06.08.2004 JP 2004230589
(71) Applicant: YAZAKI CORPORATION, Minato-ku Tokyo 108-8333 (JP)
(72) Inventor: TSUBAKI, Akira c/o Yazaki Corporation,, Shizuoka 4101194 (JP)
(74) Representative: Viering, Jentschura & Partner
(86) International application number: PCT/JP2005/014192
(87) International publication number: WO 2006/013884

(57) **Abstract**

The present invention provides a power supply apparatus for long slide without drooping or bending a wire harness when a sliding structure is moved. The problems are solved by utilizing a power supply apparatus 1 for long slide including: a case 2 for receiving a wire harness 3 folded in a U shape; a slider 6 slidably engaged with the case, the slider holding a movable wire harness end; a timing belt 4 folded in a U shape along an inner surface of the wire harness and held with the slider at a movable end thereof; and a gear 7 engaged with the timing belt for supporting the wire harness, or a power supply apparatus 31 for long slide including: a gear 33 engaged with the timing belt 4 at a turn-around portion 3b of the wire harness 3; and a rotatable support portion 35 connected to the gear with a connection member 34 and contacting an inner surface of the timing belt.

## Description

### Technical Field

The present invention relates to a power supply apparatus for long slide disposed in a long sliding structure such as a sliding door or sliding seat of a motor vehicle. The power supply apparatus receives a long wire harness folded in a U shape to prevent bending of the long wire harness.

### Related Art

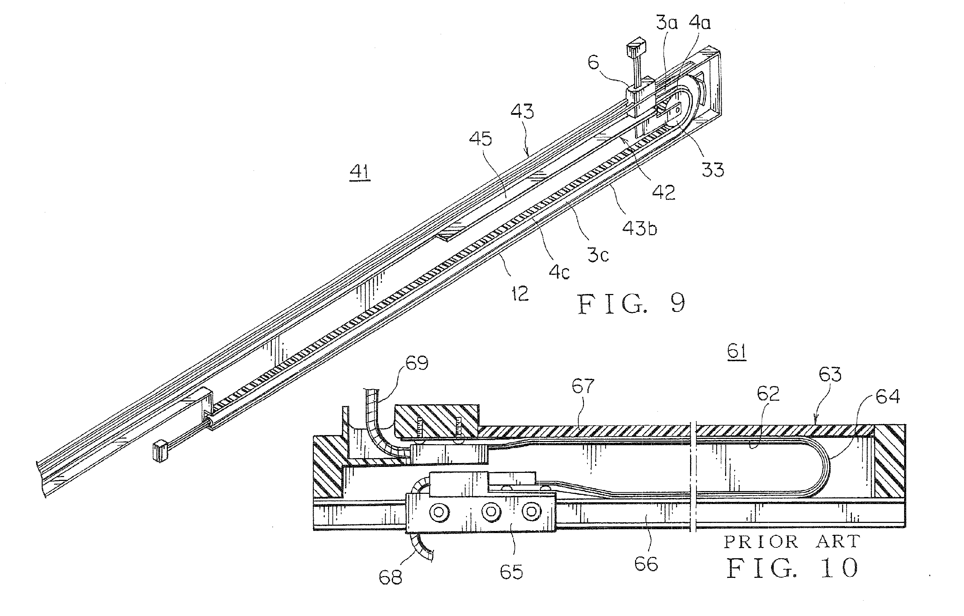

FIG. 10 shows a conventional power supply apparatus (JP,H11-242807,A).

The conventional power supply apparatus 61 is disposed in a sliding door of a motor vehicle. The power supply apparatus 61 includes an elongate case 63 for receiving a flat wire harness 62 folded in a U shape, a flexible reinforcing plate 64 disposed on an outer surface of the wire harness 62, a slider 65 disposed on a movable end of the wire harness 62, and a rail 66 slidably engaging with the slider 65.

The reinforcing plate 64 is formed with a thin steel and is held by a magnetized wall 67 of the case 63 and holds the flat wire harness 62. The movable end of the flat wire harness 62 is connected to a wire harness 68 of a vehicle body at the slider 65 and a fixed end of the flat wire harness 62 is connected to a wire harness 69 of the sliding door.

The slider 65 moves back and forth on the rail 66 as the sliding door is closed and opened. The flat wire harness 62 moves back and forth with the slider 65 and keeps the U shape to absorb a stroke of closing and opening of the sliding door. An electric power and signal are thereby supplied to auxiliary devices of the sliding door from the vehicle body.

The conventional power supply apparatus 61 utilizes the flat wire harness 62 so that a number of circuitries and a current supplied are limited. The magnetized wall 67 for holding the steel reinforcing plate 64 has a complicated structure resulting to high cost.

It is disclosed that a power supply apparatus (not shown) utilizing a wire harness with a circular or oval section prevents drooping of the wire harness with rigidity of the wire harness itself.

The power supply apparatus is adapted to a short slide stroke but not to a long slide stroke. FIGS. 11-13 show a power supply apparatus 71 adapted to a long sliding door or long sliding seat of a motor vehicle. The power supply apparatus 71 has an elongate case 74 and a slider 73. As shown in FIGS. 12 and 13, as a sliding structure such as the sliding door and sliding seat moves, a wire harness 72 disposed in the case 74 droops down and bends severalfold and stops further movement of the slider 73.

### Disclosure of the Invention

An object of the present invention is to provide a power supply apparatus for long slide, the power supply apparatus providing a smooth sliding operation of a long sliding structure, such as a long sliding door and long sliding seat, without drooping and bending of a wire harness.

According to a first aspect of the present invention, a power supply apparatus for long slide includes: a case for receiving a wire harness folded in a U shape; a slider slidably engaged with the case, the slider holding a movable wire harness end; a timing belt folded in a U shape along an inner surface of the wire harness and held with the slider at a movable end thereof; and a gear engaged with the timing belt for supporting the wire harness.

Thereby, the timing belt is positioned along the inner surface of the wire harness and engaged with the gear at an inner surface thereof for supporting the wire harness through the timing belt without bending. The wire harness and timing belt each have a forward portion following the slider, a turn-around portion, and a return portion, and the gear is positioned between the forward portion and return portion of the timing belt. As the slider moves, the forward portion of the timing belt becomes shorter and the return portion thereof becomes longer and the gear rotates to move in a direction of movement of the slider. The timing belt is preferably made of a synthetic resin (plastic) to support the wire harness without a large drooping or bending of the timing belt.

Preferably, the gear is slidably engaged with the case. Thereby, the gear is positioned in place and can be moved back and forth along the case. The central axle of the gear is slidably engaged with guide portions of long slits or grooves of the case. When both side surfaces of the gear are supported with inner surfaces of the case without falling down, the guide portions are not necessary.

Preferably, the gear is positioned in a middle point of the U shaped wire harness when a forward portion and a return portion in a longitudinal direction of the wire harness become longest.

Thereby, the gear becomes positioned to the droopiest portion of the wire harness to prevent the bending of the wire harness. The bending of the wire harness means drooping or bending inward in the case.

Preferably, the case has a narrow portion and a wide portion, and the gear is disposed in the wide portion.

Thereby, the timing belt enters into the narrow portion together with the slider and the wire harness and supports the wire harness therein. The timing belt is supported with an inner surface of a lower wall of the narrow portion so that the wire harness is supported without or with less bending therein. The timing belt itself can support the wire harness to some extent. The gear disposed in the wide portion further supports the wire harness so that the case functions for long slide.

According to a second aspect of the present invention, a power supply apparatus for long slide includes: a case for receiving a wire harness folded in a U shape; a slider slidably engaged with the case, the slider holding a movable wire harness end; a timing belt folded in a U shape along an inner surface of the wire harness and held with the slider at a movable end thereof; a gear engaged with the timing belt at a turn-around portion of the wire harness; and a rotatable support portion connected to the gear with a connection member and contacting an inner surface of the timing belt.

Thereby, the timing belt is positioned on the inner surface of the wire harness, and the gear is positioned at a turn-around portion of the timing belt and engaged therewith. The rotatable support portion is separate from the gear and supports the wire harness through the timing belt without bending. The rotatable support portion can be a pulley or gear and the pulley preferably having a small sliding friction against the timing belt. The gear and the rotatable support portion are connected together with a connection member with a prescribed distance and move together within the timing belt. The wire harness and timing belt each have a forward portion following the slider, the turn-around portion, and a return portion, and the gear is positioned at the turn-around portion of the timing belt and the rotatable support portion is positioned between the forward portion and return portion of the timing belt. The gear always defines correctly the position of the turn-around portions of the wire harness and the timing belt to smoothly move them. As the slider moves, the forward portion of the timing belt becomes shorter and the return portion becomes longer, and the gear and the rotatable support portion rotate therebetween in a direction of movement of the slider. The timing belt is preferably made of a synthetic resin (plastic) to support the wire harness without drooping or bending of itself.

Preferably, the connection member is slidably engaged with the case. Thereby, the gear and the rotatable support portion connected together with the connection member are correctly positioned in place and moved along the case. The connection member is preferably a pair of connection plates slidably supported with guide portions disposed in the case. When both side surfaces of the connection plates are supported with inner surfaces of the case without falling down, the guide portions are not necessary.

Preferably, the rotatable support portion is positioned in a middle point of the U shaped wire harness when a forward portion and a return portion in a longitudinal direction of the wire harness become longest.

Thereby, the rotatable support portion becomes positioned to the droopiest portion of the wire harness to prevent the bending of the wire harness. The bending of the wire harness means drooping or bending inward in the case.

Preferably, the connection member includes a guide plate facing the gear, the guide plate contacting an outer surface of the turn-around portion of the wire harness.

Thereby, the turn-around portions of the timing belt and the wire harness are positioned between the gear and the guide plate so that the both turn-around portions securely contact to each other and are correctly positioned in place such that the displacement of the timing belt and the wire harness is prevented.

Preferably, the case has a narrow portion and a wide portion, and the gear and the rotatable support portion are disposed in the wide portion.

Thereby, the timing belt enters into the narrow portion together with the slider and the wire harness and supports the wire harness therein such that the timing belt is supported with an inner surface of the narrow portion to prevent or reduce drooping or bending of the wire harness. The timing belt itself can support the wire harness to some extent. The power supply apparatus further includes the wide portion to support the wire harness with the rotatable support portion so that the case is extended longer for long slide.

According to a third aspect of the present invention, a power supply apparatus for long slide includes a case receiving a wire harness folded in a U shape; a slider slidably engaged with the case, the slider holding a movable wire harness end; a timing belt folded in a U shape along an inner surface of the wire harness and held with the slider at a movable end thereof; a gear engaged with the timing belt at a turn-around portion of the wire harness; and a support plate connected with the gear and making surface contact with an inner surface of the timing belt.

Thereby, the timing belt is positioned along the inner surface of the wire harness, and the gear is engaged with a turn-around portion of the timing belt. The support plate following the gear supports the wire harness through the timing belt making surface contact with the support plate. The support plate can be connected to the central axle of the gear with an integral connection portion and move in the timing belt. The wire harness and the timing belt each have a forward portion following the slider and a return portion following the turn-around portion, respectively. The gear is positioned in the turn-around portion of the timing belt and the support plate is positioned between the forward and return portions of the timing belt. The gear always correctly defines the positions of the turn-around portions of the wire harness and the timing belt so as to make a smooth movement thereof. As the slider moves, the forward portion of the timing belt becomes shorter and the return portion thereof becomes longer, and the support plate moves in parallel with the timing belt between the forward and return portions thereof. The timing belt is preferably made of a synthetic resin (plastic) to support the wire harness without drooping or bending of the timing belt.

Preferably, the support plate is slidably engaged with the case. Thereby, the support plate is correctly positioned in place and smoothly moved back and forth so that the gear is always correctly positioned. Guide portions are disposed on the case for slidably guiding both side ends of the support plate. When the both sides of the support plate and the connection portions are supported with the inner surface of the case without falling down, the guide portions can be deleted.

Preferably, the support plate includes a guide plate facing the gear, the guide plate contacting an outer surface of the turn-around portion of the wire harness.

Thereby, the turn-around portions of the timing belt and the wire harness are positioned between the gear and the guide plate so that the both turn-around portions securely contact to each other and are correctly positioned in place such that the displacement of the timing belt and the wire harness is prevented.

### Brief Description of the Drawings

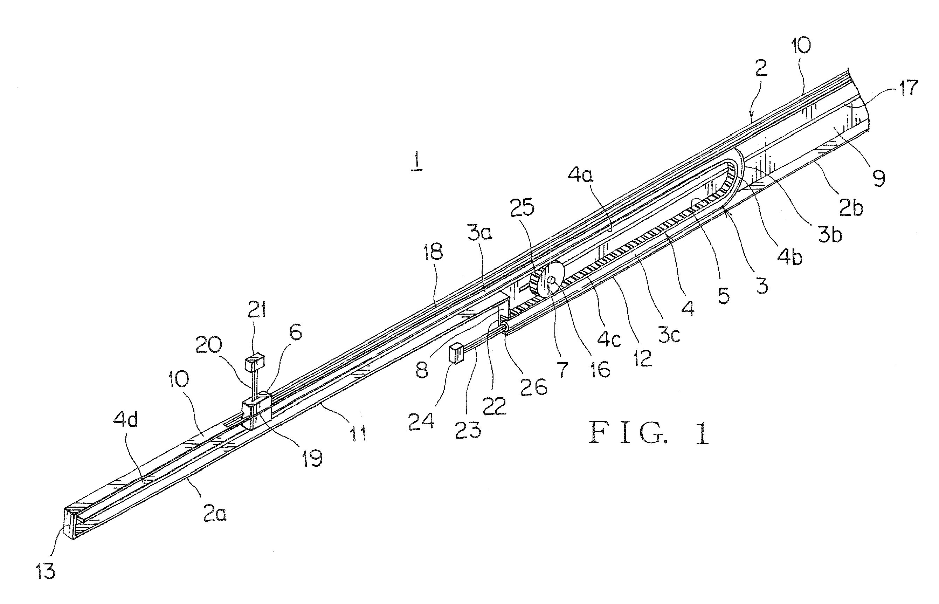

FIG. 1 is a perspective view of a first embodiment of a power supply apparatus for long slide of the present invention, a slider being positioned in the most forward position;

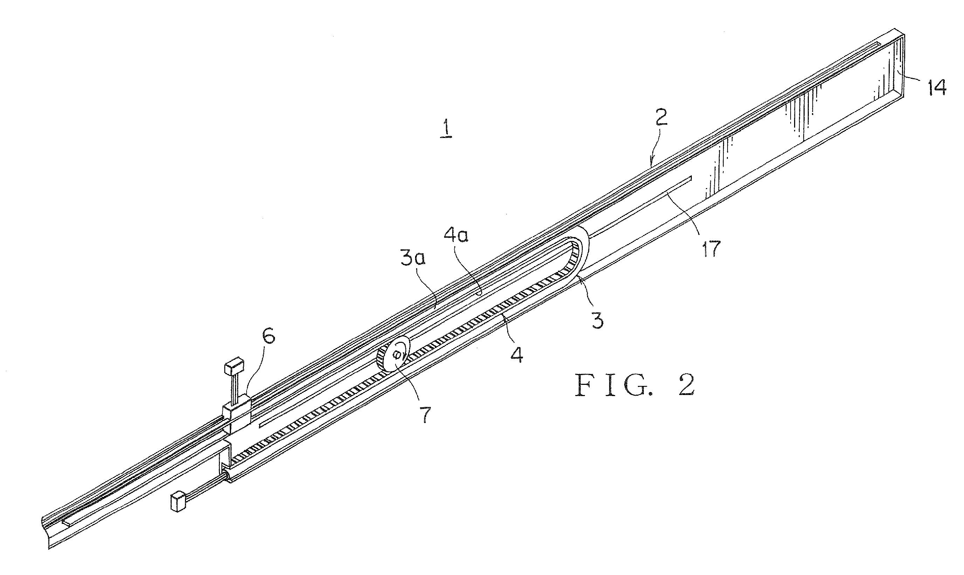

FIG. 2 is a perspective view showing the slider in a intermediate position;

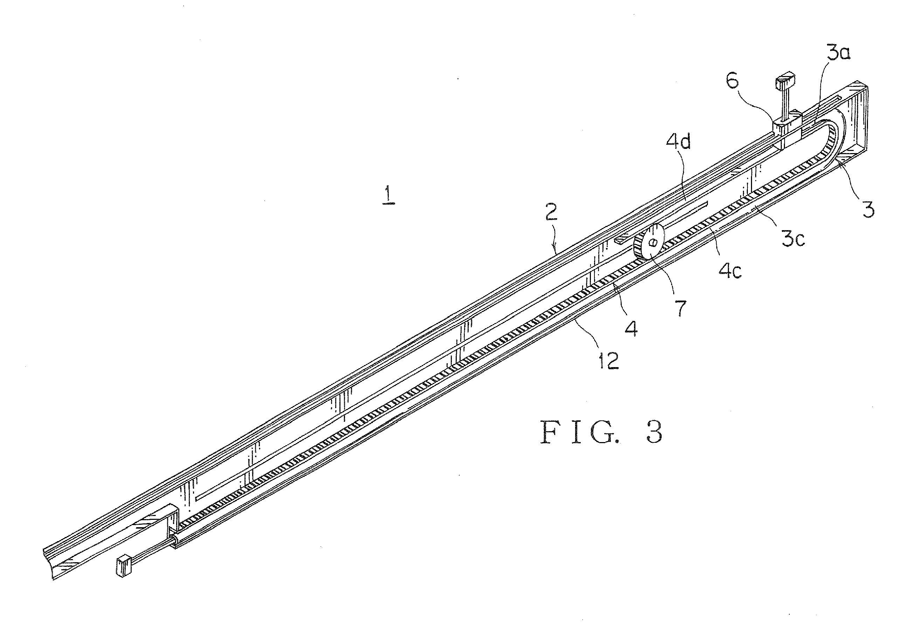

FIG. 3 is a perspective view showing the slider in the most rearward position;

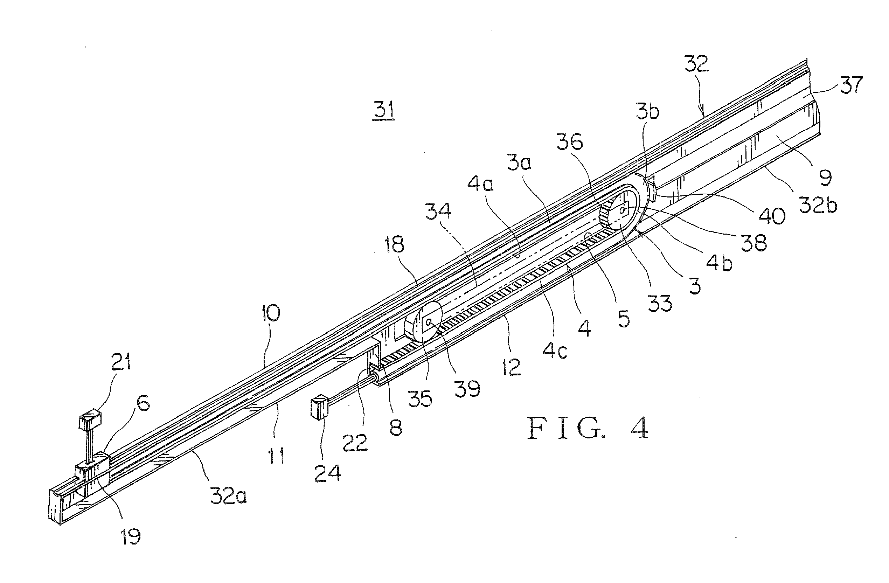

FIG. 4 is a perspective view of a second embodiment of a power supply apparatus for long slide of the present invention, a slider being positioned in the most forward position;

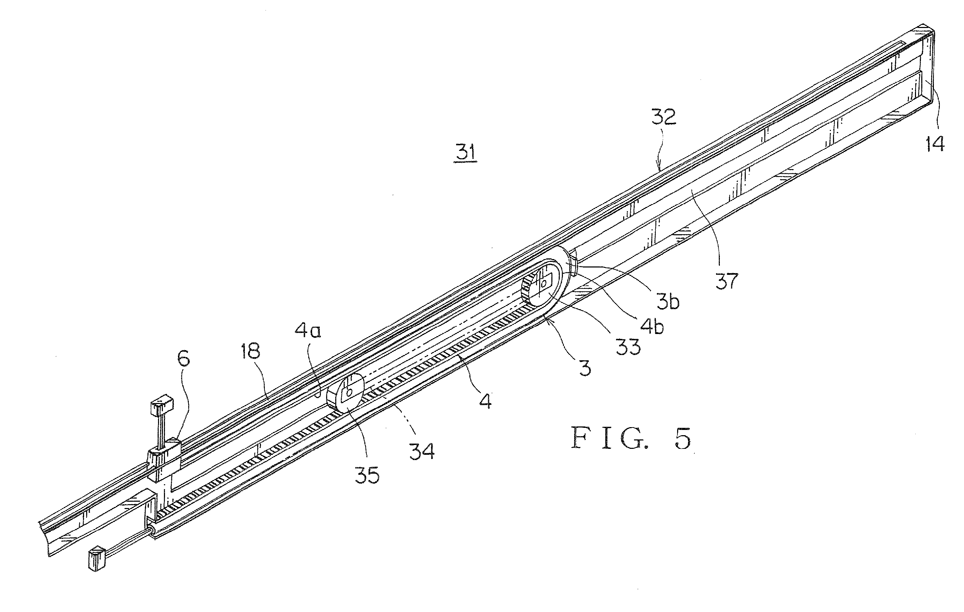

FIG. 5 is a perspective view showing the slider in a intermediate position;

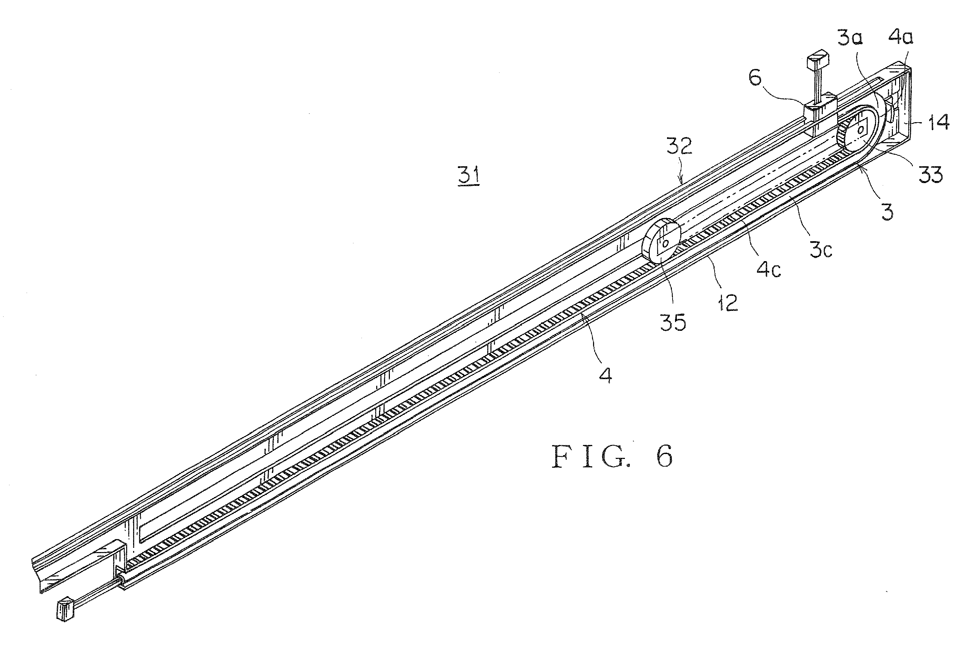

FIG. 6 is a perspective view showing the slider in the most rearward position;

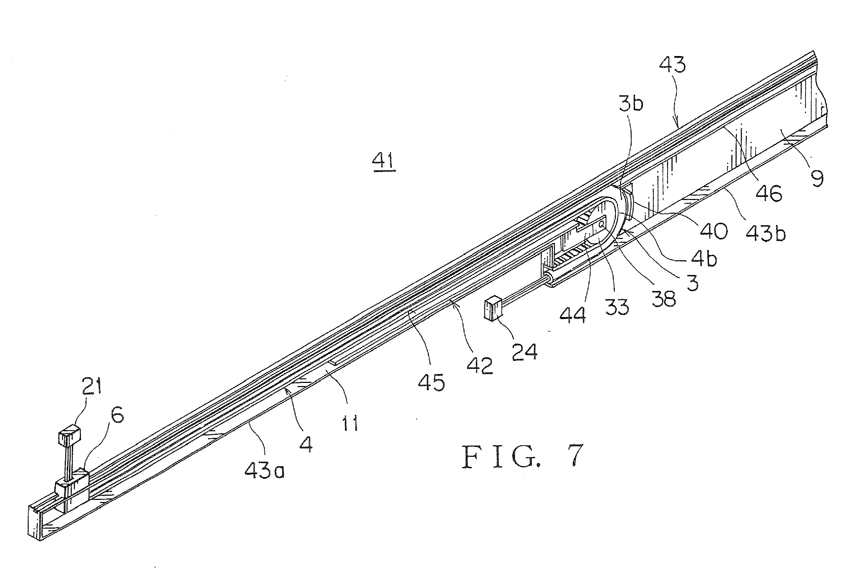

FIG. 7 is a perspective view of a third embodiment of a power supply apparatus for long slide of the present invention, a slider being positioned in the most forward position;

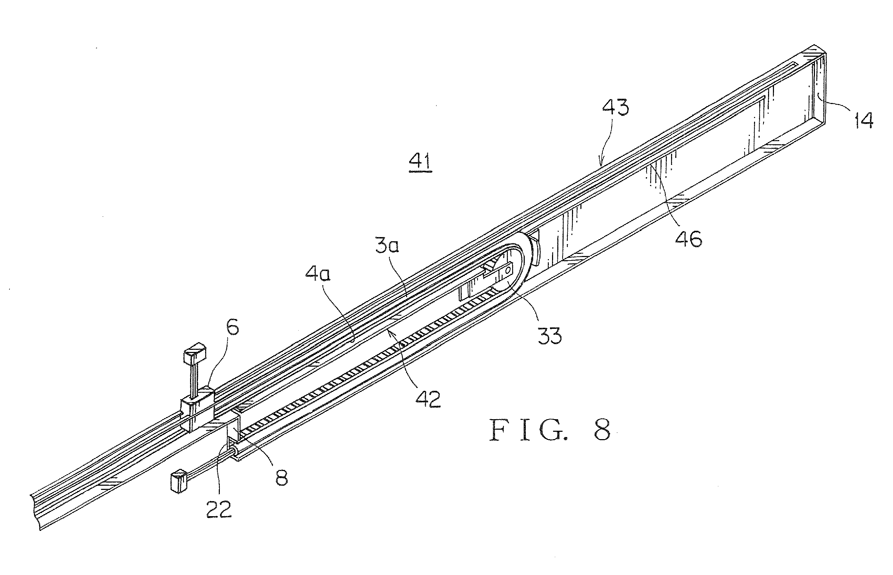

FIG. 8 is a perspective view showing the slider in a intermediate position;
FIG. 9 is a perspective view showing the slider in the most rearward position;
FIG. 10 is a sectional view of an embodiment of a conventional power supply apparatus;

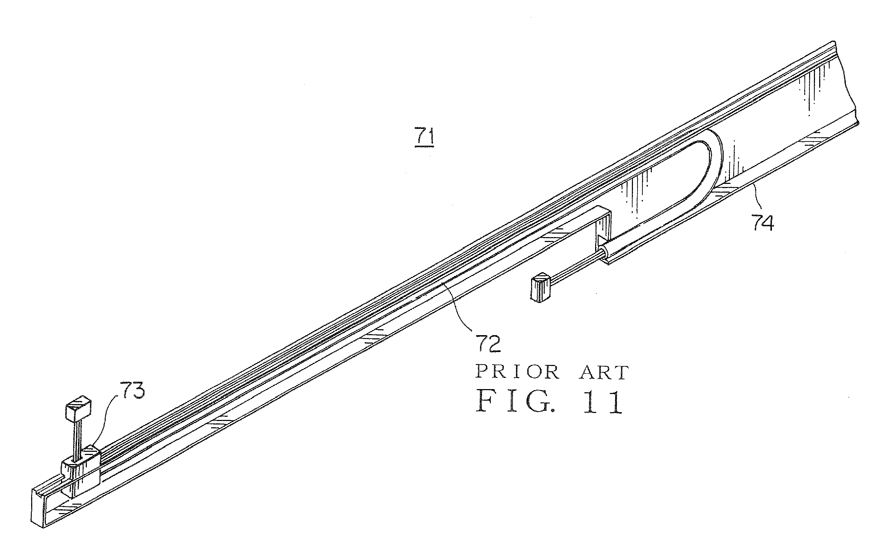

FIG. 11 is a perspective view of a conventional power supply apparatus;

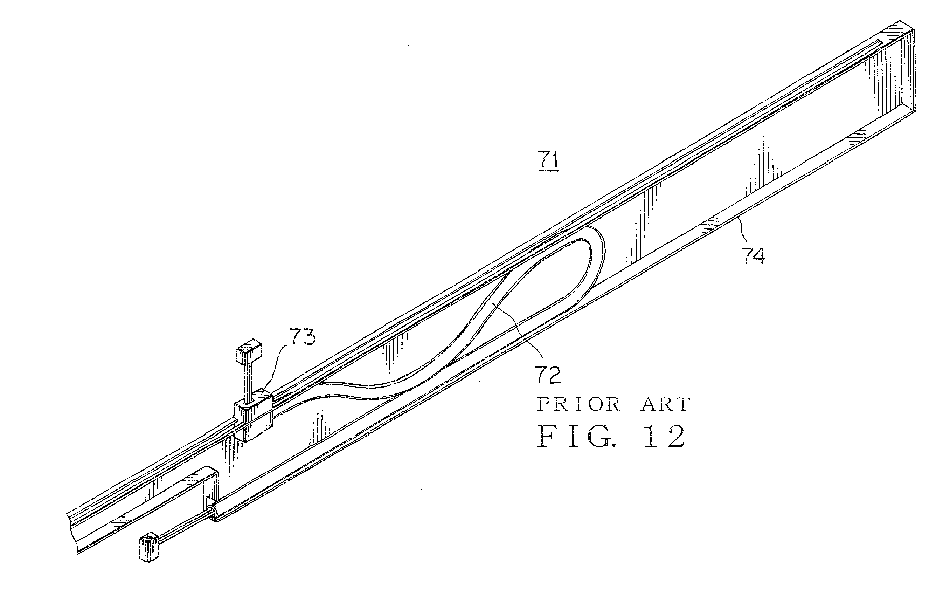

FIG. 12 is a perspective view showing a problem of the conventional power supply apparatus; and

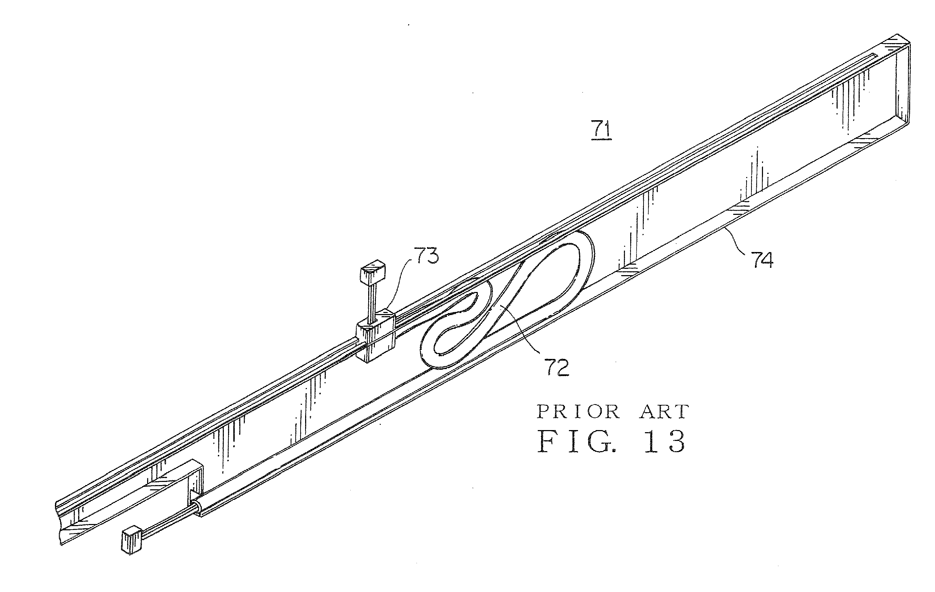

FIG. 13 is a perspective view showing another problem of the conventional power supply apparatus.

### Best Mode for Carrying out the Invention

FIGS. 1-3 show a first embodiment of a power supply apparatus for long slide of the present invention.

The power supply apparatus 1 for long slide includes an elongate case 2, which has a narrow portion 2a and a wide portion 2b along a longitudinal direction thereof, a wire harness 3 with a circular or oval section, which is arranged in the case 2 with a U or J shape, a timing belt 4 made of a synthetic resin, which is slidably disposed along an inner surface of the wire harness 3 in the case 2 with a U or J shape, a slider 6 slidably disposed on the case 2, which holds one end (movable end) of the timing belt 4 and slides on the case 2 along the longitudinal direction of the case 2, a gear (rotatable support portion) 7 engaging with a teeth portion 5 inside the timing belt 4, the gear 7 supporting the wire harness 3 through the timing belt 4 and driving the wire harness 3 in a direction of movement of the slider 6.

The case 2 made of a synthetic resin or a metal includes a main body 2 (same reference number as the case) and a plate shaped cover (not shown) . The main body 2 includes the narrow portion 2a and the wide portion 2b intervened with a step portion 8. The cover (not shown) covers a front opening of the main body 2 and is fastened to the main body 2 with a locking means or fastener.

The main body 2 has a base wall 9, an upper wall 10, lower walls 11 and 12, a front wall 13, and a rear wall 14, upstanding from the base wall 9. The base wall 9 extends over the narrow and wide portions 2a. and 2b. The base wall 9 and the cover each have a guide portion 17, elongate groove or bore, extending in a longitudinal direction thereof at the center of a width of the wide portion 2b. The guide portions 17 slidably engage with the central axle 16 of the gear 7. If the gear 7 is slidably supported between the base wall 9 and the cover without falling down, the guide portions 17 and the central axle 16 are unnecessary.

As shown in FIG. 1, the upper wall 10 of the main body 2 has a slit-shaped guide portion 18 for slidably guiding the slider 6. A groove 19 formed at a midpoint of height of the slider 6 slidably engages with the guide portion 18. An upper half portion of the slider 6 is exposed outside from the main body 2 and a lower half portion thereof is disposed inside the narrow portion 2a of the main body 2. The meanings of upper, lower, front, and rear of the specification do not necessary mean the direction of the power supply apparatus 1 in use.

The narrow portion 2a of the main body 2 has the lower wall 11 connected to the step portion 8, the front wall 13, and the upper wall 10. The wide portion 2b of the main body 2 has the lower wall 12, a front wall (step portion 8), the rear wall 14 (FIG. 2), the base wall 9, and the upper wall 10. The base wall 9 and the upper wall 10 extend over the narrow and wide portions 2a and 2b.

The timing belt 4 is fixed at a lower portion of the slider 6 with an adhesion or screw and further extends over the slider 6 (extension portion 4d) . The wire harness 3 is bent in a L shape at the slider 6 and forms a movable wire harness end 20 and is connected to a connector 21.

As seen in FIG. 1, when the slider 6 is positioned in the most forward position, the timing belt 4 extends from the extension portion 4d through the slider 6 to a middle point of the wide portion 2b along an inner surface of the upper wall 10 and is turned around in the U shape and is returned along an inner surface of the lower wall 12 and is fixed at an inner edge of an opening 22 disposed at a front end of the wide portion 2b, or the step portion 8, of the case 2.

The wire harness 3 extends from the slider 6 toward a belt bent portion 4b through between the inner surface (lower surface) of the upper wall 10 and an outer surface (upper surface) of the timing belt 4. The wire harness 3 is in contact with the upper surface of the timing belt 4 and is supported therewith without drooping. The wire harness 3 is turned around with the U shape at an outer surface of the belt bent portion 4b and is fixed at the opening 22 of the step portion 8 and is led out from the opening 22 and is connected to a connector 24.

The timing belt 4 is made of a flexible plastic having a relatively high rigidity to a extent of preventing drooping. The timing belt 4 has the smooth flat outer surface contacting the wire harness 3 and the plurality of teeth portions 5 with equally-spaced and parallel to each other on an inner surface thereof. The inner surface of the timing belt 4 engages with the gear 7. The teeth portions 5 have the same pitch as teeth portions 25 of the gear 7. The gear 7 is preferably made of a synthetic resin.

The wire harness 3 has a corrugated tube 26 made of a synthetic resin for protecting a plurality of insulated electrical wires. The corrugated tube 26 has alternating annular ridges and grooves around the tube and is well flexible.

When the slider 6 is positioned at the most forward position as depicted in FIG. 1, the gear is positioned close to the step portion 8 to thereby support the timing belt 4 without drooping or bending. The timing belt 4 thus supports the wire harness 3 without drooping or bending. The wire harness 3 in the narrow portion 2a is supported with the timing belt 4 but also can be supported with the lower wall 11 through the adjacent timing belt 4 so that the drooping of the wire harness 3 is prevented.

When a sliding structure such as a sliding door or sliding seat is slid rearward from a state in FIG. 1 to that in FIG. 2, the slider 6 and an upper portion (forward portion) 4a of the timing belt 4 move rearward together and the gear 7 rotates in a direction denoted an arrow and moves rearward with the timing belt 4. The upper (forward) portion 4a of the timing belt 4 and an upper (forward) portion 3a of the wire harness 3 are supported horizontally without drooping and bending. In FIG. 2, the gear 7 moved is positioned in a nearly middle point of the length of the upper portion 3a of the wire harness 3 in the wide portion 2b and prevents the drooping or bending of the timing belt 4 so that the wire harness 3 is stably supported with the timing belt 4 and the slider 6 can smoothly slide without jamming.

When the slider 6 is moved to the most rearward position as depicted in FIG. 3, a lower (return) portion 4c of the timing belt 4 extends long on an upper surface of a lower (return) portion 3c of the wire harness 3 and the lower portion 3c of the wire harness 3 is positioned on the lower wall 12 of the main body 2 and the gear 7 engages with the extension portion 4d of the timing belt 4.

At the most rearward position of the slider 6 as shown in FIG. 3, the wire harness 3 does not droop the upper portion 3a thereof because of the short length. When the slider 6 is positioned close to the step portion 8 of the case 2 as shown in FIG. 2, the upper portion 3a of the wire harness 3 in the wide portion 2b becomes longest and tends to droop. However, the gear 7 located in the nearly middle point of the upper portion 3a of the wire harness 3 in the wide portion 2b prevents the drooping of the upper portion 3a.

When the slider 6 is reversed (advanced) from the position of FIG. 3, the upper portions 4a and 3c of the timing belt 4 and the wire harness 3 become longer respectively. The gear 7 located in the middle points of the upper portions 4a and 3a thereof prevents the drooping of the upper portions 4a and 3a thereof so that the slider 6 can smoothly slide without jamming.

A bent portion 3b (turn-around portion) of the wire harness 3 moves a half of the moving distance of the slider 6. The positions of the slider 6 and the bent portion 3b of the wire harness 3 have a linear relation (proportional) among them. Contrary to this, the position of the center of the upper portion 3a in the wide portion 2b of the case 2, or the droopiest position, varies in a quadratic function manner.

The gear 7 is accordingly not always on the middle point of the upper portion 3a of the wire harness 3 in the wide portion 2b of the case 2. It is thus preferable that the gear 7 is set to be positioned at the middle portion or the droopiest or most bending portion when the upper portion 3a of the wire harness 3 in the wide portion 2b becomes longest as shown in FIG. 2.

It is noticed that the drooping of the upper portion 3a of the wire harness 3 occurs when the power supply apparatus 1 is mounted vertically as shown in FIGS. 1-3. Whereas, when the power supply apparatus 1 is mounted horizontally, the upper (forward) portion 3a of the wire harness 3 bends. Accordingly, the bending of the wire harness 3 has a broad meaning including the drooping.

FIG. 1 shows the sliding structure (not shown) such as the sliding door or sliding seat slid at one end (forward end or rearward end). When the power supply apparatus 1 is mounted vertically in the sliding door, the movable wire harness end 20 led out from the slider 6 is connected to the vehicle body through a step space and a harness 23 led out from the case 2 is fixed to the sliding door and connected to a wire harness or auxiliary units. FIG. 1 shows the left side sliding door fully closed, FIG. 2 shows an intermediate state, and FIG. 3 shows the sliding door fully opened.

When the power supply apparatus 1 is adopted to the sliding seat and disposed vertically on a floor panel of the vehicle body, the movable wire harness end 20 led out from the slider 6 is connected to a wire harness or auxiliary units of the sliding seat and the harness 23 led out from the case 2 is connected to the wire harness of the vehicle body. FIG. 1 shows the sliding seat in a front end position (or rear end position), FIG. 2 shows the sliding seat in the intermediate position, and FIG. 3 shows the sliding seat in the rear end position (or front end position).

When the power supply apparatus 1 is horizontally mounted to the vehicle body, the movable wire harness end 20 led out from the slider 6 is arranged in the sliding seat by bending in a direction of a thickness of the case 2 (upward direction) . The same arrangements are also utilized in the embodiments described below.

In the above embodiment, the long hole or long groove as the guide portion 18 for the slider 6 can be disposed on the base wall 9 and the cover instead of the upper wall 10 of the case 2, and projections or ribs engaging with the guide portions 18 can be disposed on the slider 6. The movable wire harness end 20 can be led outside from the elongate guide portion disposed on the cover or the base wall 9, or from the guide portion disposed on the upper wall 10 of the case 2. The same arrangement is also adapted to the embodiments described below.

The extension portion 4d may be cut off at the state of FIG. 3 and the gear 7 may engage the upper portion 4a of the timing belt 4 when the slider 6 moves forward and passes over the gear 7. In this case, the narrow portion 2a of the case 2 can be shorter in the vicinity of the most forward position of the slider 6. The twice distance of movement of the slider 6 compared to the gear 7 makes it possible.

FIGS. 4-6 show a second embodiment of a power supply apparatus for long slide. Like parts as the first embodiment refer to like reference signs for omitting the detailed explanation.

The power supply apparatus 31 for long slide includes an elongate case, or main body 32, a wire harness 3 having a circular or oval section and folded in the case 32 in a U or J shape, a timing belt 4 made of a synthetic resin and flexibly disposed along an inner surface or the wire harness 3 in a U or J shape, a slider 6 slidably disposed on the case 32 and holding one end of the timing belt 4, a gear 33 engaging with teeth portions 5 of an inner surface of a bent portion 4b of the timing belt 4 for supporting the timing belt 4 and moving it in a direction of movement of the slider 6, and a pulley (rotatable support portion) 35 connected with a pair of connection plates (connection members) 34 for supporting the wire harness 3 through the timing belt 4 to prevent a drooping or bending of the wire harness 3.

The second embodiment of the power supply apparatus 31 is different from the first embodiment 1 about the position of the gear 33 and an addition of the pulley 35 moving together with the gear 33. The timing belt 4 drives the gear 33 and the pulley 35 prevents the drooping or bending of the wire harness 3 through the timing belt 4. A diameter of the pulley 35 is almost the same as a diameter of a cylindrical portion forming a base of teeth portions 36 of the gear 33. The gear 33 and the pulley 35 are preferably made of a synthetic resin.

The case 32 is made of the same material and has the same shape as the case 2 of the first embodiment. A narrow portion 32a of a front half of the case 32 is shorter than that 2a (FIG. 1) of the first embodiment. In the second embodiment, the extension portion 4d is not required. The narrow portion 32a is much shorter than a wide portion 32b of the case 32. The slider 6 slides a distance almost same as the first embodiment.

The case 32 includes the main body and a cover (not shown) . A base wall 9 of the wide portion 32b and the cover have relatively wide grooves or guide portions 37 for slidably guiding the pair of connection plates 34 connected with the gear 33 and the pulley 37. The guide portions 37 extend from a vicinity of a step portion 8 to a rear wall 14. The pair of the connection plates 34 rotatably support the central axle 38 of the gear 33 and the central axle 39 of the pulley 35 with the both axles 38 and 39 penetrating or engaging the connection plates 34.

One connection plate 34 extends rearward to include a circular guide plate 40 facing the gear 33. The U shaped bent portions (turn-around portions) 4b and 3b of the timing belt 4 and the wire harness 3 are positioned between the gear 33 and the guide plate 40. The guide plate 40 assists the bent portion 4b of the timing belt 4 to always engage the gear 33 and the bent portion 3b of the wire harness 3 to always contact the bent portion 4b of the timing belt 4. It is possible to dispose a plurality of rollers (not shown) with a small diameter on the guide plate 40 to reduce sliding friction against the wire harness 3.

The second embodiment has almost the same structure as the first embodiment. The power supply apparatus 31 has a guide portion 18 of an elongate slit at an upper wall 10 of the case 32 for slidably engaging with the slider 6. The slider 6 has a groove 19 engaging with the guide portion 18. The slider 6 holds the one end of the upper (forward) portion 4a of the timing belt 4 in the case 32. The timing belt 4 is bent in a U shape along the gear 33 and one end of a lower (return) portion 4c thereof is fixed at an edge of an opening 22 of the step portion 8. An upper (forward) portion 3a of the wire harness 3 is straight arranged from the slider 6 to the gear 33 along an outer surface of the timing belt 4 and turned around at the gear 33. A lower (return) portion 3c thereof is straight arranged between the outer surface of the timing belt 4 and a lower wall 12 of the case 2.

When the slider 6 is positioned at a forward position of the narrow portion 32a as shown in FIG. 4, the gear 33 is positioned in a front half of the wide portion 32b of the case 32 . The pulley 35 positioned close to the step portion 8 supports the timing belt 4 without a drooping or bending of the wire harness 3. The timing belt 4 thus supports the upper portion 3a of the wire harness 3 without drooping and bending.

When a sliding structure such as a sliding door or sliding seat is slid, the slider 6 is moved rearward along the guide portion 18, and the upper portion 4a of the timing belt 4 moves together with the slider 6. The gear 33 thereby rotates while supporting the bent portion 4b of the timing belt 4 and a bent portion 3b of the wire harness 3, respectively. The pulley 35 and the gear 33 rotate integrally with the connection plates 34 so that the pulley 35 in the wide portion 32b of the case 32 supports the middle portion of the upper portion 4a of the timing belt 4 without drooping and bending, and the timing belt 4 supports the upper portion 3a of the wire harness 3 without drooping and bending.

When the slider 6 is positioned close to the step portion 8 or a front end of the wide portion 32b of the case 32 as depicted in FIG. 5, the upper portion 3a of the wire harness 3 becomes longest in the wide portion 32b and tends to droop and bend. The pulley 35 is however positioned at a middle point of the upper portion 3a of the wire harness 3 so that the pulley 35 prevents the drooping or bending of the wire harness 3 and the slider 6 can smoothly move without jamming.

When the slider 6 is moved to a rearward position of the case 32 as depicted in FIG. 6, the gear 33 approaches to the rear wall 14 and the slider 6 comes close to the gear 33. The upper portions 4a and 3a of the timing belt 4 and the wire harness 3 become shortest and the lower portions 4c and 3c thereof extend long along the lower wall 12 of the case 32.

When the slider 6 is moved in a reverse (forward) direction from the state of FIG. 6, the gear 33 and the pulley 35 rotate in a reverse direction while the gear 33 smoothly engages the timing belt 4. In the intermediate state such as depicted in FIG. 5, the pulley 35 supports the timing belt 4 and the wire harness 3 to prevent the drooping or bending of the wire harness 3 and assist the slider 6 to smoothly move to the most forward position as in FIG. 4 without jamming.

The wire harness 3 is not positioned above the pulley 35 in FIG. 6. As the slider 6 moves forward, the upper portions 4a and 3a of the timing belt 4 and the wire harness 3 pass over the pulley 35 and move forward. This function comes from that the moving distance of the slider 6 is twice as those of the gear 33 and the pulley 35.

In the second embodiment, the pulley 35 can be replaced with a second gear so that the first gear 33 and the second gear are concurrently engaged with the timing belt 4. In this case, the second gear prevents the timing belt 4 and the wire harness 3 from drooping and bending.

A connection rod or connection block can be used in place of the connection plates 34 for connecting the gear 33 and the pulley 35. For example, the connection block is disposed between the gear 33 and the pulley 35. The connection rod or connection block rotatably supports the central axles 40 and 39 of the gear 33 and pulley 35, respectively. If circular side surfaces of the gear 33 or the pulley 35 contact the inner surface of the base wall 9 of the case 32 and the inner surface of the cover without clearance, the guide portion 37 of the case 32 for sliding the connection plate 34 is not necessary.

FIGS. 7-9 show a third embodiment of a power supply apparatus for long slide. Like structures are referred to the same reference signs for omitting the detailed explanations.

The power supply apparatus 41 for long slide has a support plate (support portion) 42 connected to a gear 33 for making surface contact with and supporting a timing belt 4 and a wire harness 3 in place of the pulley 35 and the connection plates 34 of the second embodiment of FIG. 4.

The power supply apparatus 41 includes an elongate case 43, the wire harness 3 with a circular or oval section arranged in the case 43 in a U or J shape, the timing belt 4 made of a synthetic resin flexibly disposed in a U or J shape along an inner surface of the wire harness 3, a slider 6 disposed on the case 43, the slider 6 holding one end of the timing belt 4 and being slidable in a longitudinal direction of the case 43, the gear 33 engaging with teeth portions 36 of an inner surface of a U-shaped bent portion 4b of the timing belt 4 for supporting the timing belt 4 and driving it in a direction of movement of the slider 6, and the support plate 42 connected to the gear 33 for making surface contact with and supporting the wire harness 3 through the timing belt 4 without drooping or bending.

The support plate 42 includes a pair of L shaped connection portions 44 connected to the central axle 38 of the gear 33, and a rectangular or strip plate main body 45 integral with the connection portions 44. The connection portions 44 are narrow strips and are connected to the axle 38 of the gear 33 at each circular side thereof. The plate main body 45 is a little wider than the timing belt 4.

A base wall 9 and a cover (not shown) of the case 43 include guide portions 46 of narrow groove or slit disposed along a longitudinal direction of the case 43, the guide portions 46 slidably engaging with lateral both ends of the plate main body 45. The guide portions 46 straight extend from a middle portion of a narrow portion 43a of the case 43 to a vicinity of a rear wall 14 (FIG. 8).

As shown in FIG. 7, the plate main body 45 can enter into the narrow portion 43a and be positioned on an inner surface of a lower wall 11 of the narrow portion 43a. When the slider 6 is positioned in the most forward position as depicted in FIG. 7, a front end of the plate main body 45 is positioned in the nearly middle point of the narrow portion 43 in a longitudinal direction.

One of the connection portions 44 extends rearward and has a circular guide plate 40 facing the gear 33. The bent portions (turn-around portions) 4b and 3b of the timing belt 4 and the wire harness 5 are positioned between the gear 33 and the guide plate 40. The guide plate 40 operates the bent portion 4b of the timing belt 4 to always engage the gear 33 and the bent portion 3b of the wire harness 3 to always contact the bent portion 4b of the timing belt 4. The guide plate 40 may have a plurality of rollers (not shown) with a small diameter to reduce sliding friction against the wire harness 3.

When the slider 6 is positioned in a middle point of long slide or close to a step portion 8 of the case 43, an upper (forward) portion 3a of the wire harness 3 becomes longest in a wide portion 43b and most tends to droop or bend. The front end of the plate main body 45 becomes adjacent to the step potion 8 and the plate main body 45 supports an upper portion (forward portion) 4a of the timing belt 4 with surface contact of the entire length thereof. The upper portion 3a of the wire harness 3 in the wide portion 43b of the case 43 is entirely supported through the upper portion 4a of the timing belt 4.

When the slider 6 is positioned in the most rearward position of the case 43 as depicted in FIG. 9, the front end of the plate main body 45 becomes positioned in the middle point of the wide portion 43b in the longitudinal direction. The upper portions 4a and 3a of the timing belt 4 and the wire harness 3 are left a little, and lower portions 4c and 3c thereof straight extend along a lower wall 12 of the case 43.

The case 41 has a guide portion 18 of a long slit disposed on an upper wall 10 thereof for slidably guiding the slider 6. The wire harness 3 is arranged from the slider 6 and turned-around at the gear 33 and led outside from an opening 22 of the step portion 8. The wire harness 3 and the timing belt 4 are fixed together at an edge of the opening 22.

The plate main body 45 can be any length and is not necessary to have the length as shown in FIG. 8. However, the long plate main body 45 stably can support the timing belt 4 and the wire harness 3 with a wide area so as to securely prevent the wire harness 3 from drooping or bending.

As the slider 6 is reversed (forward) from the position thereof in FIG. 9, the upper portions 3a and 4a of the wire harness 3 and the timing belt 4 increase the lengths and are positioned on the plate main body 45. At the intermediate state such as FIG. 8, the upper portions 3a and 4a extend over the plate main body 45 and thereby are stably supported with surface contact of the plate main body 45. This is caused by that the moving distance of the slider 6 is twice as that of the bent portion 3b of the wire harness 3 or the gear 33.

The respective narrow portions 2a, 32a, 43a of the front halves of the cases 2, 32, 43 in the above embodiments can be formed same as the wide portions 2b, 32b, 43b of the back halves thereof. In this case, the each lead-out opening 22 is halfway disposed on the lower wall of each case or the front wall. When the stroke of the slider 6 can be made a little shorter, only the wide portions 2b, 32b, 43b function for long slide without the narrow portions 2a, 32a, 43a.

### Industrial Applicability

The gear prevents the drooping or bending of the wire harness through the timing belt so that the slider can long slide without bending of the wire harness in the case and smoothly operate and improve reliability to a power supply apparatus for long slide.

In the present invention, the gear is further prevented from falling down or being displaced so that the gear securely supports the wire harness.

In the present invention, the gear further supports the droopiest portion of the wire harness.

In the present invention, the narrow portion supporting the wire harness with the timing belt and the inner surface of the case extends the case for long slide.

In the present invention, the rotatable support portion prevents the drooping or bending of the wire harness through the timing belt. The slider thereby smoothly slide without bending of the wire harness in the case. The gear correctly positions the turn-around portions of the timing belt and the wire harness, and makes movement of the timing belt and the wire harness smooth. Electrical power is thereby reliably supplied to the long sliding structure.

In the present invention, the gear and the rotatable support potion are further prevented from falling down or being displaced so that the rotatable support portion securely supports the wire harness.

In the present invention, the rotatable support portion further supports the droopiest portion of the wire harness.

In the present invention, the displacements of the timing belt and the wire harness are prevented, and the rotatable support portion securely supports the wire harness through the timing belt.

In the present invention, the narrow portion supports the wire harness with the timing belt and the inner surface of the lower wall so that the length of the case can be extended for long slide.

In the present invention, the support plate prevents the drooping or bending of the wire harness through the timing belt. The slider can smoothly long slide without bending of the wire harness in the case. The gear correctly positions the turn-around portions of the timing belt and the wire harness, and makes movement of the timing belt and the wire harness smooth. Electrical power is thereby reliably supplied to the long sliding structure.

In the present invention, the support plate and the gear are prevented from falling down or being displaced so that the wire harness is securely supported with the support plate.

In the present invention, the displacements of the timing belt and the wire harness are prevented and the support plate securely supports the wire harness through the timing belt.

## Claims

1. A power supply apparatus for long slide comprising:
a case for receiving a wire harness folded in a U shape;
a slider slidably engaged with the case, the slider holding a movable wire harness end;
a timing belt folded in a U shape along an inner surface of the wire harness and held with the slider at a movable end thereof; and
a gear engaged with the timing belt for supporting the wire harness.

2. The power supply apparatus as claimed in claim 1, wherein the gear is slidably engaged with the case.

3. The power supply apparatus as claimed in claim 1 or 2, wherein the gear is positioned in a middle point of the U shaped wire harness when a forward portion and a return portion in a longitudinal direction of the wire harness become longest.

4. The power supply apparatus as claimed in any one of claims 1-3, wherein the case has a narrow portion and a wide portion, and the gear is disposed in the wide portion.

5. A power supply apparatus for long slide comprising:
a case for receiving a wire harness folded in a U shape;
a slider slidably engaged with the case, the slider holding a movable wire harness end;
a timing belt folded in a U shape along an inner surface of the wire harness and held with the slider at a movable end thereof;
a gear engaged with the timing belt at a turn-around portion of the wire harness; and
a rotatable support portion connected to the gear with a connection member and contacting an inner surface of the timing belt.

6. The power supply apparatus as claimed in claim 5, wherein the connection member is slidably engaged with the case.

7. The power supply apparatus as claimed in claim 5 or 6, wherein the rotatable support portion is positioned in a middle point of the U shaped wire harness when a forward portion and a return portion in a longitudinal direction of the wire harness become longest.

8. The power supply apparatus as claimed in any one of claims 5-7, wherein the connection member includes a guide plate facing the gear, the guide plate contacting an outer surface of the turn-around portion of the wire harness.

9. The power supply apparatus as claimed in any one of claims 5-8, wherein the case has a narrow portion and a wide portion, and the gear and the rotatable support portion are disposed in the wide portion.

10. A power supply apparatus for long slide comprising:
a case receiving a wire harness folded in a U shape;
a slider slidably engaged with the case, the slider holding a movable wire harness end;
a timing belt folded in a U shape along an inner surface of the wire harness and held with the slider at a movable end thereof;
a gear engaged with the timing belt at a turn-around portion of the wire harness; and
a support plate connected with the gear and making surface contact with an inner surface of the timing belt.

11. The power supply apparatus as claimed in claim 10, wherein the support plate is slidably engaged with the case.

12. The power supply apparatus as claimed in claim 10 or 11, wherein the support plate includes a guide plate facing the gear, the guide plate contacting an outer surface of the turn-around portion of the wire harness.
